# EUROPEAN PATENT APPLICATION

(11) **EP 4 722 004 A1**
(43) Date of publication of application: **08.04.2026**
(21) Application number: 25202298.3
(22) Date of filing: 15.09.2025
(51) Int. Cl.: B60C 11/03, B60C 11/12, B60C 9/20

(54) **PNEUMATIC TIRE**

(30) Priority: 02.10.2024 JP 2024173339
(71) Applicant: Toyo Tire Corporation, Itami-shi, Hyogo 664-0847 (JP)
(72) Inventor: KUBO, Naoya, Itami-shi, Hyogo 664-0847 (JP)
(74) Representative: von Hirschhausen, Helge

(57) **Abstract**

A pneumatic tire includes a tread (2). The pneumatic tire further includes a carcass and a belt. The tread (2) includes a pair of shoulder main grooves (12, 13) and shoulder ribs (50, 60) disposed further outward in the tire axial direction relative to the shoulder main grooves (12, 13), respectively. Each of the shoulder ribs (50, 60) includes a slit (51, 61) that extends in a direction intersecting the shoulder main grooves (12, 13) and terminates within the shoulder rib (50, 60). The slit (51, 61) has an inward end in the tire axial direction, and the inward end is disposed further inward in the tire axial direction relative to a contact end (E1, E2) of the tread (2). A ratio (D/W) of a length D [mm] of the belt in a tire axial direction with respect to a contact width W[mm] of the tread is less than 1.1.

## Description

### TECHNICAL FIELD

The present invention relates to a pneumatic tire.

### BACKGROUND

A known pneumatic tire includes a tread having a pair of shoulder main grooves, and shoulder ribs disposed further outward in the tire axial direction, hereinafter referred to as axially outward or the axially outward direction, relative to the shoulder main grooves. Patent Literature 1 discloses a pneumatic tire including shoulder ribs having slits extending along the tire axial direction. A pneumatic tire having such slits achieves enhanced steering stability, for example.

### CITATION LIST

### PATENT LITERATURE

Patent Literature 1: JP 5667614 B

### SUMMARY

Studies conducted by the present inventors have revealed that slits disposed in communication with the shoulder main grooves increase impacting sound generated in response to the shoulder ribs contacting the road surface, thereby impairing noise performance. Meanwhile, slits disposed not in communication with the shoulder main grooves tend to increase the weight of the tire due to an increase in the volume of the tread rubber to thereby deteriorate rolling resistance. Deterioration of rolling resistance further leads to deterioration of fuel economy. Thus, it is not easy to enhance noise performance while securing fuel economy.

A pneumatic tire in accordance with an embodiment of the present invention is a pneumatic tire including a tread. The pneumatic tire further includes a carcass, and a belt disposed outward of the carcass in a tire radial direction, and including at least one belt ply. The tread includes a pair of shoulder main grooves, and shoulder ribs disposed further outward in the tire axial direction relative to the shoulder main grooves. Each of the shoulder ribs includes a slit that extends in a direction intersecting the shoulder main grooves and terminates within the shoulder rib. The slit has an inward end in the tire axial direction. The inward end is disposed further inward in the tire axial direction relative to a contact end of the tread. A ratio (D/W) of a length D [mm] of the belt in the tire axial direction with respect to a contact width W[mm] of the tread is less than 1.1.

The pneumatic tire of the present invention enhances noise performance while securing fuel economy.

### BRIEF DESCRIPTION OF DRAWINGS

An embodiment of the present invention will be described based on the following figures, wherein:
FIG. 1 is a cross sectional view of a pneumatic tire according to an example embodiment; and
FIG. 2 is a plan view of a tread of the pneumatic tire according to the example embodiment.

### DESCRIPTION OF EMBODIMENTS

A pneumatic tire according to an embodiment of the present invention will be described in detail below by reference to the drawings. The embodiment described below is only an example, and the present invention is not limited to the example. Further, selective combinations of elements in the embodiment and modification examples described below fall within the range of the present invention.

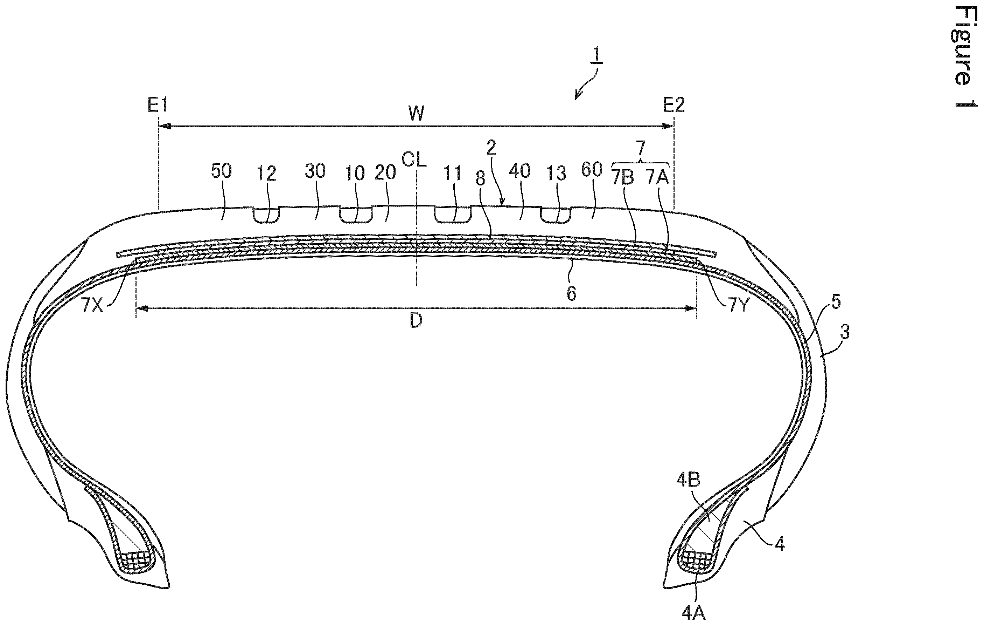

FIG. 1 schematically illustrates a cross section of a pneumatic tire 1 according to an embodiment of the present invention. As illustrated in FIG. 1, the pneumatic tire 1 includes a tread 2 that comes into contact with a road surface, a side wall 3 forming a tire side face, and a bead 4 to be secured to a rim of a wheel. The pneumatic tire 1 is suitable, for example, for summer tires of motor vehicles having high acceleration performance, such as electric vehicles (EV) and hybrid electric vehicles (HV), or sport utility vehicles (SUV) having a heavy weight.

The pneumatic tire 1 has a specified mounting direction with respect to a vehicle, and therefore has opposite mounting directions on the right and left sides of a vehicle. More specifically, the tread 2 has different tread patterns on left and right sides with respect to a tire equator or center line CL. The tire equator or center line CL as used herein refers to a virtual line passing the center, in the tire axial direction, of the tread 2 along the tire circumferential direction. In the present specification, the term "left and right," which is used for convenience of explanation, refers to left and right of the pneumatic tire 1 that is mounted on the vehicle, with respect to the traveling direction of the vehicle.

The tread 2 includes a pair of center main grooves 10 and 11, and a pair of shoulder main grooves 12 and 13 disposed further axially outward relative to the center main grooves 10 and 11, respectively. The four main grooves extend in straight lines along the tire circumferential direction without curving in the tire axial direction.

The tread 2 further includes a center rib 20 defined by the center main grooves 10 and 11 and disposed on the tire equator CL, a first middle rib 30 defined by the center main groove 10 and the shoulder main groove 12, and a second middle rib 40 defined by the center main groove 11 and the shoulder main groove 13. The tread 2 further includes a first shoulder rib 50 that is disposed opposite the first middle rib 30 in the tire axial direction, with the shoulder main groove 12 interposed between first shoulder rib 50 and the first middle rib 30, and a second shoulder rib 60 that is disposed opposite the second middle rib 40 in the tire axial direction, with the shoulder main groove 13 interposed between the second shoulder rib 60 and the second middle rib 40. The first shoulder rib 50 and the second shoulder rib 60 are formed beyond contact ends E1 and E2, respectively. The rib as used herein refers to a region raised outward in the tire radial direction, hereinafter referred to as radially outward, from the location corresponding to the bottom of the main groove, and is also referred to as a "land".

In the present specification, the contact ends E1 and E2 of the pneumatic tire 1 are defined as opposite ends in the tire axial direction of a region (contact patch) of an unused tire that is in contact with the flat road surface, when the tire is mounted on a normal rim and inflated to a normal internal pressure, and a predetermined load corresponding to 88% of the normal load is applied to the tire.

The "normal rim" as used herein refers to a rim defined according to the tire standard, and is a "standard rim" according to the Japanese Automobile Tire Manufacturing Association (JATMA), and a "Measuring Rim" according to the Tire and Rim Association (TRA) and the European Tire and Rim Technical Organization (ETRTO). The "normal internal pressure" is a "maximum air pressure" according to JATMA, the maximum value in Table "TIRE LOAD LIMITS AT VARIOUS COLD INFLATION PRESSURES" in TRA, and an "INFLATION PRESSURE" according to ETRTO. The normal internal pressure is typically 180 kPa for tires for passenger vehicles, but is 220 kPa for tires labeled with Extra Load or Reinforced. The "normal load" is a "maximum load rating" according to JATMA, the maximum value described in Table "TIRE LOAD LIMITS AT VARIOUS COLD INFLATION PRESSURES" according to TRA, and a "LOAD CAPACITY" according to ETRTO.

The side wall 3 is disposed on each of the opposite sides of the tread 2 and is annularly formed along the tire circumferential direction. The side wall 3 is a portion of the pneumatic tire 1 which axially protrudes furthest outward, and is gently curved to protrude axially outward. The side wall 3 functions to prevent damage to a carcass 5. The side wall 3 is configured to be bent most in the event of cushioning operation of the pneumatic tire 1, and is typically made of pliant rubber having fatigue performance.

The bead 4 is disposed radially inward relative to the side wall 3 and is secured to the rim of the wheel. The bead 4 includes a bead core 4A and a bead filler 4B. The bead core 4A that is composed of a steel bead wire is an annular member extending along the entire circumference of the tire and is embedded in the bead 4. The bead filler 4B has a tapered shape extending radially outward and is an annular hard rubber member extending along the entire circumference of the tire.

The carcass 5 extends between a pair of beads 4 and is folded around the bead core 4A for engagement. The carcass 5 is composed of at least one carcass ply that is composed of carcass cords coated with a coating rubber. The carcass cord is disposed at a substantially right angle (80° or more and 90° or less, for example) with respect to the tire circumferential direction. Organic fiber used for the carcass cord includes, for example, polyester fiber, rayon fiber, aramid fiber, and nylon fiber.

An inner liner 6 covers the inner face of the tire between the pair of beads 4. The inner liner 6 is composed of air permeation resistant rubber and has a function to retain the air pressure of the pneumatic tire 1.

The pneumatic tire 1 further includes a belt 7 disposed radially outward of the carcass 5, and a cap ply 8 covering the radially outside of the belt 7 to reinforce the belt 7. The number of cap plies 8 may be one or two or more.

The belt 7 is disposed radially outward of the top portion of the carcass 5 in an overlapping manner with the outer circumferential face of the carcass 5. The belt 7 comprises a belt ply composed of cords arranged in an inclined direction with respect to the tire circumferential direction, which are covered with rubber. The material of the cords of the belt ply is not particularly limited and may be organic fiber such as polyester, rayon, nylon, or aramid, or a metal such as steel.

In the present embodiment, the belt 7 is composed of two belt plies 7A and 7B. The cords constituting the two belt plies 7A and 7B are disposed to intersect each other between the two belt plies 7A and 7B.

Here, the tire 1 is configured such that the ratio (D/W) of D [mm] that is a contact width of the tread 2 with respect to W [mm] that is a length of the belt 7 in the tire axial direction, which will be referred to as the "axial length", is less than 1.1. The contact width of the tread 2 as used herein refers to a length of the tread 2 from the contact end E1 to the contact end E2 along the tire axial direction. The axial length of the belt 7 as used herein refers to the axial length of the belt 7 between the axially outward ends 7X and 7Y of the belt 7.

Typically, the weight of the belt 7 is greater than the weight of the tread rubber constituting the tread 2. Therefore, setting the ratio (D/W) to less than 1.1 to thereby reduce the tire axial length of the belt 7 enables a reduction in tire weight. Reduction in the tire weight further leads to a reduction in the rolling resistance, thereby enhancing fuel economy.

The configuration in which the ratio D/W is adjusted to less than 1.1 to reduce the axial length of the belt 7 tends to have a lowered cornering power property (hereinafter referred to as "CP property"). As will be described in detail below, the first shoulder rib 50 and the second shoulder rib 60 according to the present embodiment include a slit 51 and a slit 61 that terminate within the first shoulder rib 50 and the second shoulder rib 60, respectively. This configuration enables an increase in the contact patch of the tread 2 to thereby secure the CP property.

The ratio (D/W) of D [mm] with respect to W [mm] may be less than 1.1, and is preferably 1.05 or more and 1.09 or less, and more preferably 1.06 or more and 1.08 or less. This configuration enables a further reduction in rolling resistance while securing the CP property.

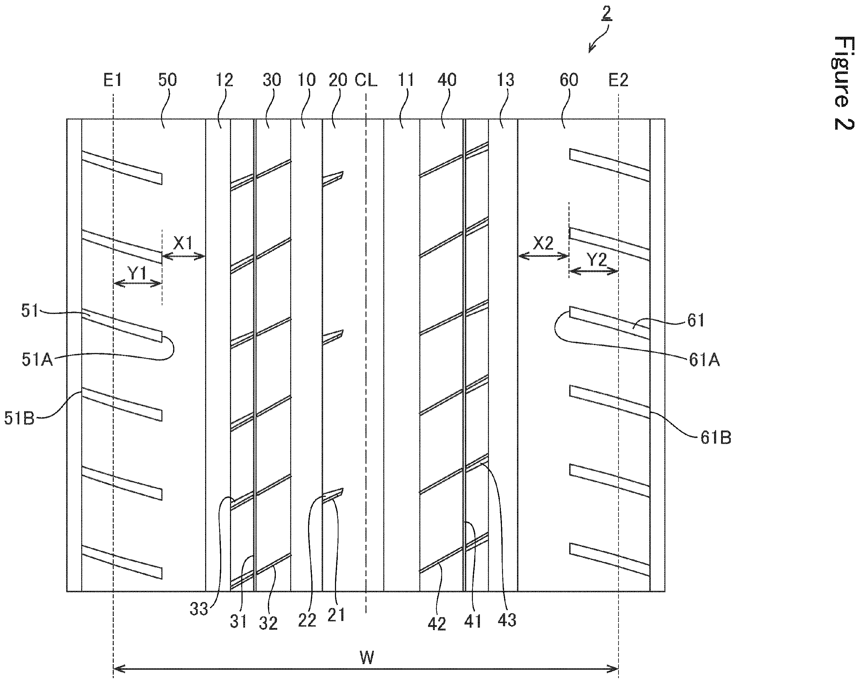

With reference to FIG. 2, the tread pattern of the pneumatic tire 1 will be described. FIG. 2 is a plan view of the tread 2 of the pneumatic tire 1.

As illustrated in FIG. 2, the tread 2 has an asymmetrical tread pattern with respect to the tire equator CL. The tread pattern of the pneumatic tire 1 remarkably exhibits the advantages of the present invention when the tire is mounted on the vehicle such that the side of the tire adjacent to the contact end E1 is located outward of the vehicle and the side of the tire adjacent to the contact end E2 is located inward of the vehicle.

The tread 2 includes the pair of center main grooves 10 and 11, and the pair of shoulder main grooves 12 and 13 disposed axially outward of the center main grooves 10 and 11, respectively. The center main groove 10 and the shoulder main groove 12 are disposed in a region that is closer to the contact end E1 relative to the tire equator CL, and the center main groove 11 and the shoulder main groove 13 are disposed in a region that is closer to the contact end E2 relative to the tire equator CL. The number of the main grooves is not limited to four, and may be three or less or five or more.

The center main grooves 10 and 11 and the shoulder main grooves 12 and 13 extend in straight lines along the tire circumferential direction without curving in the tire axial direction. This configuration allows water on the road surface to easily come into the center main grooves 10 and 11 and the shoulder main grooves 12 and 13 to thereby enhance drainage performance. At least one of the center main grooves 10 and 11 and the shoulder main grooves 12 and 13 may have a zigzag shape.

In the present embodiment, the center main grooves 10 and 11 have a greater width than the shoulder main grooves 12 and 13. This configuration enables further enhancement in drainage performance. Further, the center main grooves 10 and 11 have the same width and the shoulder main grooves 12 and 13 have the same width. The width of the center main grooves 10 and 11 is 6 mm or more and 15 mm or less, for example, and the width of the shoulder main grooves 12 and 13 is 5 mm or more and 14 mm or less, for example. The width of the shoulder main grooves 12 and 13 may be the same as the width of the center main grooves 10 and 11 or may be greater than the width of the center main grooves 10 and 11. In the present specification, the width of the groove refers to the width of a profile face of the tread 2 along the contact patch, unless otherwise specified.

The total width of the four main grooves may be, for example, 5% or more, and preferably 10% or more, of the length W from the contact end E1 to the contact end E2 along the tire axial direction, which is referred to as a "contact width W". This configuration enhances drainage performance. Further, the total width of the four main grooves may be, for example, 30% or less, and preferably 25% or less, of the contact width W. This configuration achieves excellent steering stability. Therefore, the total width of the four main grooves may be, for example, 5% or more and 30% or less, and preferably 10% or more and 25% or less, of the contact width W.

The center main grooves 10 and 11 and the shoulder main grooves 12 and 13 have the same depth, for example. The depth of the center main grooves 10 and 11 and the shoulder main grooves 12 and 13 is, for example, 7 mm or more and 15 mm or less. However, the center main grooves 10 and 11 and the shoulder main grooves 12 and 13 may have different depths.

At least one of the center main grooves 10 and 11 or the shoulder main grooves 12 and 13 typically includes a wear indicator (not shown). The wear indicator is a protrusion disposed on the groove bottom and serves as an indicator that confirms the wear level of the tread rubber.

The tread 2 further includes the center rib 20 defined by the center main grooves 10 and 11, the first middle rib 30 defined by the center main groove 10 and the shoulder main groove 12, and the second middle rib 40 defined by the center main groove 11 and the shoulder main groove 13. The tread 2 further includes the first shoulder rib 50 disposed opposite to the first middle rib 30 in the tire axial direction with the shoulder main groove 12 interposed between the first middle rib 30 and the first shoulder rib 50, and the second shoulder rib 60 disposed opposite to the second middle rib 40 in the tire axial direction with the shoulder main groove 13 interposed between the second middle rib 40 and the second shoulder rib 60. The center rib 20, the first middle rib 30, the second middle rib 40, the first shoulder rib 50, and the second shoulder rib 60 each extend continuously in the tire circumferential direction.

### Center Rib 20

The center rib 20 is disposed on the tire equator CL. In the present embodiment, the center of the center rib 20 in the tire axial direction is located closer to the contact end E1 than the tire equator CL. The center rib 20 has a width that is 5% or more and 30% or less of the contact width.

The center rib 20 includes sipes 21. The sipes 21 are disposed at predetermined intervals along the tire circumferential direction. In the present specification, a sipe refers to a groove having a groove width of 1.5 mm or less. The groove width does not include a width of a cut portion that will be described below.

The sipe 21 extends from the center main groove 10 toward the tire equator CL and terminates within the center rib 20. The sipe 21 further has a length that starts from the center main groove 10 and does not reach the tire equator CL. However, the sipe 21 may have a length that starts from the center main groove 10 and reaches the tire equator CL, or may extend from the center main groove 10 to the center main groove 11.

The length of the sipe 21 in the tire axial direction, which will be hereinafter referred to as the "axial length", may be, for example, 10% or more and 45% or less of the width of the center rib 20, and preferably, 20% or more and 45% or less of the width of the center rib 20. The width of the sipe 21 is 0.5 mm or more and 1.0 mm or less, for example. The sipe 21 typically has a smaller depth than the center main groove 10, and the depth of the sipe 21 is 60% or more and 90% or less of the width of the center main groove 10.

The sipe 21 extends in a direction that is inclined toward one side of the tire circumferential direction with respect to the tire axial direction. The angle of inclination of the sipe 21 with respect to the tire axial direction is 5° or more and 60° or less, for example, and may be 10° or more and 50° or less. The sipe 21 may have a zigzag shape.

In the center rib 20, a cut portion 22 is disposed along the edge of the sipe 21. The cut portion 22 is disposed such that the edge of the sipe 21 is chamfered and widened in a predetermined depth range from the contact patch of the tread 2. The cut portion 22 disperses the contact pressure acting on the edge of the sipe 21 to thereby contribute to an enhancement in traveling performance, for example. While the cut portion 22 may be disposed on both sides of the sipe 21 in the width direction, in the present embodiment, the sipe 21 is disposed only on one side of the sipe 21 in the width direction.

The slope face forming the cut portion 22 is, in a region having the maximum width, for example, inclined at an angle of 30° or more and 60° or less or 40° or more and 50° or less with respect to a profile face along the contact patch of the tread 2. This configuration enables further effective exhibition of the function of the cut portion, and also allows the slope face to contact the road surface to thereby prevent falling of the blocks at the time of harsh braking or rapid acceleration. The cut portion 22 may be disposed over the entire length of the sipe 21 and may have an increasing width as the cut portion 22 is closer to the center main groove 10. The cut portion 22 is formed within a depth range corresponding to 30% of the largest depth of the sipe 21 from the contact patch of the tread 2, for example. This configuration improves traveling performance without impairing durability of the center rib 20.

### First Middle Rib 30

The first middle rib 30 is disposed opposite to the center rib 20 in the tire axial direction with the center main groove 10 interposed between the first middle rib 30 and the center rib 20. The first middle rib 30 is also disposed opposite to the first shoulder rib 50 in the tire axial direction with the shoulder main groove 12 interposed between the first middle rib 30 and the first shoulder rib 50. The width of the first middle rib 30 is 5% or more and 30% or less of the contact width W, for example.

The first middle rib 30 includes a sipe (circumferential sipe) 31 extending along the tire circumferential direction. The sipe 31 extends in a straight line along the tire circumferential direction without bending in the tire axial direction. The sipe 31 is disposed over the entire circumference in the tire circumference direction.

The sipe 31 is disposed closer to the contact end E1 with respect to the center portion of the first middle rib 30 in the tire axial direction. Thus, the width of a region of the first middle rib 30 closer to the contact end E1 from the sipe 31 is smaller than the width of a region of the first middle rib 30 closer to tire equator CL from the sipe 31. The width of the region of the first middle rib 30 closer to the contact end E1 from the sipe 31 is, for example, 20% or more and less than 50% of the width of the first middle rib 30. However, the sipe 31 may be disposed at the center portion of the first middle rib 30 in the tire axial direction.

The sipe 31 has a width of 0.5 mm or more and 1.0 mm or less, for example. The sipe 31 typically has a depth that is smaller than the depths of the center main groove 10 and the shoulder main groove 12. For example, the depth of the sipe 31 is 60% or more and 90% or less of the depth of the center main groove 10.

The first middle rib 30 includes, in addition to the sipe 31 extending along the tire circumferential direction, sipes (transverse sipes) 32 that extend across the first middle rib 30. The sipes 32 therefore extend from the shoulder main groove 12 to the center main groove 10. The sipes 32 are arranged at predetermined intervals in the tire circumferential direction.

The sipe 32 extends in a direction that is inclined toward one side of the tire circumferential direction with respect to the tire axial direction. The angle of inclination of the sipe 32 with respect to the tire axial direction is 5° or more and 60° or less, for example, and may be 10° or more and 50° or less. In the present embodiment, the angle of inclination of the sipe 32 with respect to the tire axial direction is substantially the same as the angle of inclination of the sipe 21 with respect to the tire axial direction.

The sipe 32 has a width that is 0.5 mm or more and 1.0 mm or less, for example. The width of the sipe 32 is substantially the same as the width of the sipe 31, for example. The sipe 32 has a depth that is 60% or more and 90% or less of the depth of the center main groove 10, for example. The sipe 32 may have a smaller depth than the sipe 31.

The number of sipes 32 may be greater than the number of sipes 21 in the center rib 20. Thus, the intervals of the sipes 32 in the tire circumferential direction may be smaller than the intervals of the sipes 21 in the tire circumferential direction.

In the first middle rib 30, a cut portion 33 is disposed along the edge of the sipe 32. The cut portion 33, similar to the cut portion 22 described above, is disposed such that the edge of the sipe 32 is chamfered and widened in a predetermined depth range from the contact patch of the tread 2. While the cut portion 33 may be disposed on each of the opposite sides of the sipe 32 in the width direction, in the present embodiment, the cut portion 33 is disposed only on one side of the sipe 32 in the width direction. The cut portion 33 distributes the contact pressure acting on the edge of the sipe 32 to thereby contribute to an enhancement in traveling performance.

The cut portion 33 is disposed in a portion of the edge of the sipe 32 located between the shoulder main groove 12 and the sipe 31. In other words, the cut portion 33 is not disposed in a portion of the edge of the sipe 32 between the center main groove 10 and the sipe 31. This configuration facilitates securing of durability of the first middle rib 30.

The slope face forming the cut portion 33 is inclined at an angle of 30° or more and 60° or less, or 40° or more and 50° or less, with respect to the profile face along the contact patch of the tread 2 in a portion of the slope face having the largest width. This configuration allows the cut portion 33 to achieve its function more effectively. The cut portion 33 may have an increasing width as the cut portion 33 approaches the shoulder main groove 12. The cut portion 33 is formed within the depth range corresponding to 30% of the depth of the deepest portion of the sipe 32 from the contact patch of the tread 2, for example. This configuration improves traveling performance without impairing the durability of the first middle rib 30.

### Second Middle Rib 40

The second middle rib 40 is disposed opposite to the center rib 20 in the tire axial direction with the center main groove 11 interposed between the second middle rib 40 and the center rib 20, and is also disposed opposite to the second shoulder rib 60 in the tire axial direction with the shoulder main groove 13 interposed between the second middle rib 40 and the second shoulder rib 60. The width of the second middle rib 40 is 5% or more and 30% or less of the contact width W, for example. In the present embodiment, the width of the second middle rib 40 is greater than the width of the first middle rib 30.

The second middle rib 40 includes a sipe (circumferential sipe) 41 extending along the tire circumferential direction. The sipe 41 extends in a straight line along the tire circumferential direction without bending in the tire axial direction. The sipe 41 is disposed over the entire circumference of the tire in the tire circumferential direction.

The sipe 41 is disposed closer to the contact end E2 with respect to the center portion of the second middle rib 40 in the tire axial direction. Thus, the width of a region of the second middle rib 40 closer to the contact end E1 from the sipe 41 is smaller than the width of a region of the second middle rib 40 closer to tire equator CL from the sipe 41. The width of the region of the second middle rib 40 closer to the contact end E2 from the sipe 41 is, for example, 20% or more and less than 50% of the width of the second middle rib 40. However, the sipe 41 may be disposed at the center portion of the second middle rib 40 in the tire axial direction.

The sipe 41 has a width of 0.5 mm or more and 1.0 mm or less, for example. The sipe 41 typically has a depth that is smaller than the depths of the center main groove 11 and the shoulder main groove 13. For example, the depth of the sipe 41 is 60% or more and 90% or less of the depth of the center main groove 11.

The second middle rib 40 includes, in addition to the sipe 41 extending along the tire circumferential direction, sipes (transverse sipes) 42 that extend across the second middle rib 40. The sipes 42 therefore extend from the center main groove 11 to the shoulder main groove 13. The sipes 42 are arranged at predetermined intervals in the tire circumferential direction.

The sipe 42 extends in a direction that is inclined toward one side of the tire circumferential direction with respect to the tire axial direction. The angle of inclination of the sipe 42 with respect to the tire axial direction is 5° or more and 60° or less, for example, and may be 10° or more and 50° or less. In the present embodiment, the angle of inclination of the sipe 42 with respect to the tire axial direction is substantially the same as the angle of inclination of the sipe 21 with respect to the tire axial direction.

The sipe 42 has a width that is 0.5 mm or more and 1.0 mm or less, for example. The width of the sipe 42 is substantially the same as the width of the sipe 41, for example. The sipe 42 has a depth that is 60% or more and 90% or less of the depth of the center main groove 11, for example. The sipe 42 may have a smaller depth than the sipe 41.

The number of sipes 42 may be greater than the number of sipes 21 in the center rib 20. Thus, the intervals of the sipes 42 in the tire circumferential direction may be smaller than the intervals of the sipes 21 in the tire circumferential direction.

In the second middle rib 40, a cut portion 43 is disposed along the edge of the sipe 42. The cut portion 43, similar to the cut portion 22 described above, is disposed such that the edge of the sipe 42 is chamfered and widened in a predetermined depth range from the contact patch of the tread 2. While the cut portion 43 may be disposed on each of the opposite sides of the sipe 42 in the width direction, in the present embodiment, the cut portion 43 is disposed only on one side of the sipe 42 in the width direction. The cut portion 43 distributes the contact pressure acting on the edge of the sipe 42 to thereby contribute to enhancement in traveling performance.

The cut portion 43 is disposed in a portion of the edge of the sipe 42 located between the shoulder main groove 13 and the sipe 41. In other words, the cut portion 43 is not disposed in a portion of the edge of the sipe 42 between the center main groove 11 and the sipe 41. This configuration facilitates securing of durability of the second middle rib 40.

The slope face forming the cut portion 43 is inclined at an angle of 30° or more and 60° or less, or 40° or more and 50° or less, with respect to the profile face along the contact patch of the tread 2 in a portion of the slope face having the largest width. This configuration allows the cut portion 43 to achieve its function more effectively. The cut portion 43 may have an increasing width as the cut portion 43 approaches the shoulder main groove 13. The cut portion 43 is formed within the depth range corresponding to 30% of the depth of the deepest portion of the sipe 42 from the contact patch of the tread 2, for example. This configuration improves traveling performance without impairing the durability of the second middle rib 40.

### First Shoulder Rib 50

The first shoulder rib 50 is disposed opposite to the first middle rib 30 in the tire axial direction, with the shoulder main groove 12 being interposed between the first shoulder rib 50 and the first middle rib 30. The width of the contact patch of the first shoulder rib 50 is 10% or more and 30% or less of the contact width W, for example.

The first shoulder rib 50 includes a plurality of the slits 51 extending in a direction intersecting the shoulder main groove 12 at circumferential intervals. In the present specification, a slit refers to a groove having a width of 2.0 mm or more, which is greater than the width of the sipe described above.

The slit 51 is not in communication with the shoulder main groove 12 and terminates within the first shoulder rib 50. Therefore, a region of the contact patch of the first shoulder rib 50 which is adjacent to the shoulder main groove 12 is continuous in the tire circumferential direction. This configuration significantly reduces the impacting sound generated by the first shoulder rib 50 contacting the road surface, resulting in enhanced noise performance. In other words, the slits 51 communicating with the shoulder main groove 12 would make the contact patch of the first shoulder rib 50 circumferentially non-continuous to thereby increase the impacting sound generated by contact of the first shoulder rib 50 with the road surface, and deteriorate noise performance.

Meanwhile, the configuration in which the slit 51 terminates within the first shoulder rib 50 tends to increase the tire weight due to an increase in the volume of the tread rubber, thereby further increasing the rolling resistance. The increase in the rolling resistance results in deterioration of fuel economy. As described above, the pneumatic tire of the present embodiment includes the tread 2 having the ratio (D/W) of the axial length D [mm] of the belt 7 with respect to the contact width W[mm] of the tread 2, of less than 1.1. This inhibits an increase in the tire weight in the configuration including the slit 51 terminating within the first shoulder rib 50 to thereby increase the volume of the tread rubber. More specifically, by setting the above-described ratio (D/W) to less than 1.1 with the slit 51 terminating within the first shoulder rib 50, it is possible to enhance noise performance while securing fuel economy.

The configuration including the slit 51 that terminates within the first shoulder rib 50 further enables an increase in the contact area of the region of the tread 2 near the shoulder main groove 12, thereby enhancing the CP property.

The slit 51 has an inward end 51A in the tire axial direction, which will be hereinafter referred to as an "axially inward end 51A", located further axially inward relative to the contact end E1. The slit 51 further has an outward end 51B in the tire axial direction, which will be hereinafter referred to as an "axially outward end 51B", located further axially outward relative to the contact end E1. Thus, the slit 51 is disposed across the contact end E1.

The number of slits 51 is, for example, the same as the number of sipes 32 in the first middle rib 30. In the present embodiment, the slit 51 has a substantially uniform width over the entire length of the slit 51. The maximum width of the slit 51 may be 2.0 mm or more and 6.0 mm or less, or 2.5 mm or more and 5.5 mm or less. This configuration secures durability of the first shoulder rib 50 and also enhances drainage performance. However, the slit 51 may have a decreasing width axially inward or an increasing width axially outward. The depth of the slit 51 may be substantially the same as the depth of the shoulder main groove 12 or may be 60% or more and 95% or less of the depth of the shoulder main groove 12, in the deepest region of the slit 51.

The axial length of the slit 51 from the axially inward end 51A to the axially outward end 51B may be, for example, 30% or more and 80% or less, or 40% or more and 70% or less, of the width of the first shoulder rib 50.

It is assumed that the axial length from the axially outward end of the shoulder main groove 12 to the axially inward end 51A of the slit 51 is X1 [mm]. It is further assumed that the axial length from contact end E1 to the axially inward end 51A of the slit 51 is Y1 [mm]. In this case, a ratio (Y1/X1) of the length Y1 [mm] with respect to the length X1 [mm] is preferably 0.3 or more, more preferably 0.4 or more, and further preferably 0.5 or more. The ratio (Y1/X1) of 0.3 or more enhances steering stability.

The ratio (Y1/X1) of the length Y1 [mm] with respect to the length X1[mm] is also preferably 5.0 or less, more preferably 3.0 or less, and further preferably 2.0 or less. The ratio (Y1/X1) of 5.0 or less enables creation of a region in which the contact patch of the first shoulder rib 50 is circumferentially continuous in the vicinity of the shoulder main groove 12. This configuration further enhances noise performance. Therefore, the ratio (Y1/X1) of the length Y1 [mm] with respect to the length X1 [mm] is preferably 0.3 or more and 5.0 or less, more preferably 0.4 or more and 3.0 or less, and further preferably 0.5 or more and 2.0 or less. The ratio (Y1/X1) of the length Y1 [mm] with respect to the length X1 [mm] may be 0.3 or more and 3.0 or less, 0.3 or more and 2.0 or less, 0.4 or more and 5.0 or less, 0.4 or more and 2.0 or less, 0.5 or more and 5.0 or less, or 0.5 or more and 3.0 or less.

The axial length X1 [mm] from the axially outward end of the shoulder main groove 12 to the axially inward end 51A of the slit 51 is preferably 10 or more and 25 or less, and more preferably 12 or more and 20 or less. This configuration secures steering ability and also enhances noise performance.

The axial length Y1 [mm] from the contact end E1 to the axially inward end 51A of the slit 51 is preferably 15 or more and 30 or less and more preferably 15 or more and 25 or less. This configuration secures the steering ability and also enhances noise performance.

The slit 51 extends in a direction inclined with respect to the tire axial direction. The angle of inclination of the slit 51 with respect to the tire axial direction is, for example, 5° or more and 60° or less, and may be 10° or more and 50° or less. In the present embodiment, the angle of inclination of the slit 51 with respect to the tire axial direction is substantially the same as the angle of inclination of the sipes 21, 32, and 42 with respect to the tire axial direction. The slit 51 is axially inclined in an opposite direction to that of the sipes 21, 32, and 42.

### Second Shoulder Rib 60

The second shoulder rib 60 is disposed opposite to the second middle rib 40 in the tire axial direction, with the shoulder main groove 13 being interposed between the second shoulder rib 60 and the second middle rib 40. The width of the contact patch of the second shoulder rib 60 is 10% or more and 30% or less of the contact width W, for example.

The second shoulder rib 60 includes a plurality of slits 61 extending in a direction intersecting the shoulder main groove 13 at circumferential intervals. The slit 61 has a similar shape to that of the slit 51 in the first shoulder rib 50. The number of slits 61 is the same as the number of sipes 42 disposed in the second middle rib 40.

The slit 61, similar to the slit 51, is not in communication with the shoulder main groove 13 and terminates within the second shoulder rib 60. Therefore, a region of the contact patch of the first shoulder rib 60 which is adjacent to the shoulder main groove 13 is continuous in the tire circumferential direction. This configuration significantly reduces the impacting sound generated by the second shoulder rib 60 contacting the road surface, thereby enhancing noise performance.

The slit 61 has an inward end 61A in the tire axial direction, which will be hereinafter referred to as an "axially inward end 61A", located further axially inward relative to the contact end E2. The slit 61 further has an outward end 61B in the tire axial direction, which will be hereinafter referred to as an "axially outward end 61B", located further axially outward relative to the contact end E2. Thus, the slit 61 is disposed across the contact end E2.

The axial length of the slit 61 from the axially inward end 61A to the axially outward end 61B may be, for example, 30% or more and 80% or less, or 40% or more and 70% or less, of the width of the second shoulder rib 60.

It is assumed that the axial length from the axially outward end of the shoulder main groove 13 to the axially inward end 61A of the slit 61 is X2 [mm]. It is further assumed that the axial length from the contact end E2 to the axially inward end 61A of the slit 61 is Y2 [mm]. In this case, a ratio (Y2/X2) of the length Y2 [mm] with respect to the length X2 [mm] is, similar to the ratio (Y1/X1) of the slit 51, preferably 0.3 or more, more preferably 0.4 or more, and further preferably 0.5 or more. The ratio (Y2/X2) of 0.3 or more increases the volume of the grooves of the slit 61 to thereby enhance steering stability.

The ratio (Y2/X2) of the length Y2 [mm] with respect to the length X2[mm] is, similar to the ratio (Y1/X1) of the slit 51, preferably 5.0 or less, more preferably 3.0 or less, and further preferably 2.0 or less. The ratio (Y2/X2) of 5.0 or less enables creation of a region in which the contact patch of the second shoulder rib 60 is circumferentially continuous in the vicinity of the shoulder main groove 13. This configuration further enhances noise performance. Therefore, the ratio (Y2/X2) of the length Y2 [mm] with respect to the length X2 [mm] is preferably 0.3 or more and 5.0 or less, more preferably 0.4 or more and 3.0 or less, and further preferably 0.5 or more and 2.0 or less. The ratio (Y2/X2) of the length Y2 [mm] with respect to the length X2 [mm] may be 0.3 or more and 3.0 or less, 0.3 or more and 2.0 or less, 0.4 or more and 5.0 or less, 0.4 or more and 2.0 or less, 0.5 or more and 5.0 or less, or 0.5 or more and 3.0 or less.

The axial length X2 [mm] from the axially outward end of the shoulder main groove 13 to the axially inward end 61A of the slit 61 is, similar to the length X1 [mm], preferably 10 or more and 25 or less, and more preferably 12 or more and 20 or less. This configuration secures steering stability and also enhances noise performance.

The axial length Y2 [mm] from the contact end E2 to the axially inward end 61A of the slit 61 is, similar to the length Y1 [mm], preferably 15 or more and 30 or less and more preferably 15 or more and 25 or less. This configuration secures steering stability and also enhances noise performance.

The slit 61 extends in a direction that is inclined with respect to the tire axial direction. The angle of inclination of the slit 61 with respect to the tire axial direction is, for example, 5° or more and 60° or less, and may be 10° or more and 50° or less. In the present embodiment, the angle of inclination of the slit 61 with respect to the tire axial direction is substantially the same as the angle of inclination of the sipes 21, 32, and 42 with respect to the tire axial direction. The slit 61 is axially inclined in the opposite direction to that of the sipes 21, 32, and 42. In other words, the slit 61 is inclined in the opposite direction to the slit 51 with respect to the tire axial direction.

### Examples

The present invention will be further described below according to examples; however, the present invention is not limited to these examples.

### <Example 1>

A pneumatic tire (tire size: 235/50R20 104V) having a tread pattern illustrated in FIG. 2 was produced. The length X1, the length X2, the length Y1, and the length Y2 were adjusted to the values shown in Table 1. The produced pneumatic tire that was mounted on a normal rim had a contact width W, an axial length D of the belt, and the size of the tread pattern, as described below, under the conditions of an tire internal pressure of 260 kPa and a load of 520 kg.

Contact Width W: 180 mm
Axial Length D of Belt: 196 mm
Entire Length of Slits 51 and 61: 31 mm
Groove Width of Slits 51 and 61: 3.3 to 5.4 mm

### <Examples 2 to 4 and Comparative Examples 1 to 5>

Pneumatic tires were produced in a manner similar to that of the pneumatic tire of Example 1 except that the lengths X1, the lengths X2, the lengths Y1, the lengths Y2, and the axial lengths D of the belt were adjusted to the respective values shown in Table 1.

### Evaluation of Noise Performance

Each of the produced pneumatic tires was mounted on a test vehicle, and sound pressure was measured when each test vehicle traveled at 80 km/h on a dry flat asphalt road surface, with a microphone disposed at the location of a driver's ear on the driver's seat in the vehicle cabin. The evaluation results are relative to the evaluation value of 100 in Comparative Example 1. The greater the numerical value of the evaluation result, the greater the pattern noise reduction effect and the higher the noise performance.

### Evaluation of Fuel Economy

A rolling resistance measuring drum tester was used to measure the rolling resistance of each pneumatic tire under the conditions of an air pressure of 260 kPa, a load of 520 kgf, a temperature of 23°C, and a vehicle speed of 80 km/h. The evaluation results are relative to the evaluation value of 100 in Comparative Example 1. The smaller the numerical value, the smaller the rolling resistance, showing higher fuel economy.

### Evaluation of CP Property

Each pneumatic tire was mounted on the normal rim, and the cornering force (CF) at the steering angle of 1° was measured with a flat belt cornering test machine under the condition of an air pressure of 260 kPa, a traveling speed of 80 km/h, and a load of 520 kgf. A vehicle can turn with the lateral force approximating the CF balancing with the centrifugal force, and the CP refers to a CF value at a slip angle (SA) of 1°. The evaluation results are relative to the evaluation value of 100 in Comparative Example 1. The greater the numerical value, the higher the CP property.

Table 1 shows the evaluation results of noise performance and drainage performance of the respective pneumatic tires. Table 1 also shows the lengths X1, the lengths X2, the lengths Y1, the lengths Y2, and the axial lengths D of the belt.

**Table 1**

| | TIRE SHAPE | | | | | | EVALUATION RESULTS | | |
|---|---|---|---|---|---|---|---|---|---|
| | LENGTH X1, X2 [mm] | LENGTH Y1, Y2 [mm] | BELT WIDTH D [mm] | Y1/X1 | Y2/X2 | D/W | NOISE PERFORMANCE (RELATIVE VALUE) | FUEL ECONOMY (RELATIVE VALUE) | CPPROPERTY (RELATIVE VALUE) |
| EXAMPLE 1 | 10 | 17 | 196 | 1.7 | 1.7 | 1.08 | 101 | 99 | 100 |
| EXAMPLE 2 | 20 | 7 | 196 | 0.35 | 0.35 | 1.08 | 104 | 100 | 101 |
| EXAMPLE 3 | 10 | 17 | 192 | 1.7 | 1.7 | 1.06 | 100 | 97 | 100 |
| EXAMPLE 4 | 20 | 7 | 192 | 0.35 | 0.35 | 1.06 | 102 | 98 | 100 |
| COMPARATIVE EXAMPLE 1 | 0 | 27 | 200 | - | - | 1.10 | 100 | 100 | 100 |
| COMPARATIVE EXAMPLE 2 | 10 | 17 | 200 | 1.7 | 1.7 | 1.10 | 103 | 101 | 101 |
| COMPARATIV EXAMPLE 3 | 20 | 7 | 200 | 0.35 | 0.35 | 1.10 | 106 | 102 | 102 |
| COMPARATIVE EXAMPLE 4 | 0 | 27 | 196 | - | - | 1.08 | 98 | 98 | 99 |
| COMPARATIVE EXAMPLE 5 | 0 | 27 | 192 | - | - | 1.06 | 96 | 96 | 98 |

As shown in Table 1, the pneumatic tires according to Examples have enhanced noise performance while securing fuel economy. Meanwhile, the pneumatic tires according to Comparative Examples 2 and 3 including the slits 51 and 61 terminating within the first shoulder rib 50 and the second shoulder rib 60, respectively, but having the ratio (D/W) being 1.1 or more had increased rolling resistance and therefore had deterioration in fuel economy, which is assumed to be caused by an increased weight of the tire. Further, the pneumatic tires according to Comparative Examples 4 and 5 having a decreased belt width D to therefore have the ratio (D/W) of less than 1.1, but including the slits 51 and 61 in communication with the shoulder main grooves 12 and 13, respectively, had deterioration in noise performance.

According to the above results, it is possible to enhance noise performance while securing fuel economy, by controlling the ratio (D/W) to less than 1.1 in the tread pattern in which the slits 51 and 61 are not in communication with the shoulder main grooves 12 and 13, respectively.

### REFERENCE SIGNS LIST

1 pneumatic tire, 2 tread, 3, side wall, 4 bead, 4A bead core, 4B bead filler, 5 carcass, 6 inner liner, 7 belt, 7A, 7B belt ply, 7X, 7Y axially outward end, 8 cap ply, 10, 11 center main groove, 12, 13 shoulder main groove, 20 center rib, 21 sipe, 22 cut portion, 30 first middle rib, 31, 32 sipe, 33 cut portion, 40 second middle rib, 41,42 sipe, 43 cut portion, 50 first shoulder rib (shoulder rib), 51,61 slit, 51A, 61A axially inward end, 51B, 61B axially outward end, 60 second shoulder rib (shoulder rib), CL tire equator or center line, W contact width, E1,E2 contact end

## Claims

1. A pneumatic tire (1) comprising a tread (2),
the pneumatic tire further comprising:
a carcass (5); and
a belt (7) disposed outward of the carcass (5) in a tire radial direction, the belt (7) comprising at least one belt ply (7A,7B), wherein
the tread (2) includes a pair of shoulder main grooves (12,13) and shoulder ribs (50,60) disposed further outward in the tire axial direction relative to the shoulder main grooves (12,13),
each of the shoulder ribs (50,60) includes a slit (51,61) that extends in a direction intersecting the shoulder main groove (12,13) and terminates within the shoulder rib (50,60),
the slit (51,61) has an inward end (51A,61A) in the tire axial direction, the inward end (51A,61A) being disposed further inward in the tire axial direction relative to a contact end (E1,E2) of the tread (2), and
a ratio (D/W) of a length D [mm] of the belt (7) in the tire axial direction with respect to a contact width W[mm] of the tread (2) is less than 1.1.

2. The pneumatic tire(1) according to claim 1, wherein
the ratio (D/W) of the length D[mm] with respect to the contact width W[mm] is 1.06 or more and 1.08 or less.

3. The pneumatic tire (1) according to claim 1 or 2, wherein
a ratio (Y/X) of a length Y [mm] with respect to a length X [mm] is 0.3 or more and 5.0 or less, where the length X [mm] is a length along the tire axial direction from an axially outward end of the shoulder main groove (12,13) to an axially inward end (51A,61A) of the slit (51,61), and the Y length [mm] is a length along the tire axial direction from the contact end (E!,E2) of the tread (2) to the axially inward end (51A,61A) of the slit (51,61).

4. The pneumatic tire (1) according to claim 3, wherein
the ratio (Y/X) of the length Y [mm] with respect to the length X [mm] is 0.3 or more and 2.0 or less.

5. The pneumatic tire (1) according to any one of claims 1 to 4, wherein
a length X [mm] along the tire axial direction from an axially outward end of the shoulder main groove (12,13) to the axially inward end (51A,61A) of the slit (51,61) is 10 or more and 25 or less.

6. The pneumatic tire (1) according to any one of claims 1 to 5, wherein
a length Y [mm] along the tire axial direction from the contact end (E1,E2) of the tread (2) to the axially inward end (51A,61A) of the slit (51,61) is 15 or more and 30 or less.

7. The pneumatic tire (1) according to any one of claims 1 to 6, wherein
the slit (51,61) has a maximum width of 2.0 mm or more and 6.0 mm or less.

8. The pneumatic tire (1) according to any one of claims 1 to 7, wherein
the tread further comprises:
a pair of center main grooves (10,11);
a center rib (20) that is defined by the pair of center main grooves (10,11); and
a first middle rib (30) and a second middle rib (40) that are defined by the center main grooves (10,11) and the shoulder main grooves (12,13), respectively.

9. The pneumatic tire (1) according to claim 8, wherein
the first middle rib (30) includes a plurality of transverse sipes (32) extending across the first middle rib (30), and
the number of slits (51) disposed in the shoulder rib (50) is the same as the number of transverse sipes (31) in the first middle rib.

10. The pneumatic tire (1) according to claim 8, wherein
the first middle rib (30) includes a circumferential sipe (31) extending along a tire circumferential direction, and
the circumferential sipe (31) is disposed closer to the contact end (E1) relative to a center portion of the first middle rib (30) in the tire axial direction.
